# EUROPEAN PATENT SPECIFICATION

(11) **EP 3 517 895 B1**
(45) Date of publication and mention of the grant of the patent: **13.05.2020**
(21) Application number: 19153595.4
(22) Date of filing: 24.01.2019
(51) Int. Cl.: G01C 23/00, G08G 5/02

(54) **SYSTEM AND METHOD FOR PROVIDING PRIORITIZED ALTERNATE APPROACH PROCEDURES**
SYSTEM UND VERFAHREN ZUR BEREITSTELLUNG VON PRIORISIERTEN ALTERNATIVEN ANFLUGVERFAHREN
SYSTÈME ET PROCÉDÉ POUR FOURNIR DES PROCÉDURES D'APPROCHE ALTERNATIVES PAR ORDRE DE PRIORITÉ

(30) Priority: 29.01.2018 US 201815882234
(43) Date of publication of application: 31.07.2019
(73) Proprietor: Honeywell International Inc., Morris Plains, NJ 07950 (US)
(72) Inventor: ZHANG, Bin, Morris Plains, NJ 07950 (US)
(74) Representative: Houghton, Mark Phillip

(56) References cited:
- EP-B1- 1 352 315
- US-A- 6 112 141

## Description

### TECHNICAL FIELD

The present invention generally relates to approach procedures during an aircraft flight, and more particularly relates to automatically providing prioritized alternate approach procedures to a flight crew during an aircraft flight.

### BACKGROUND

Many aircraft approach procedures are reliant on the proper functioning of various aircraft systems. For example, SBAS (satellite-based augmentation system) functionality in the GPS receiver is needed for a LPV (localizer performance with vertical guidance) approach and the FMS (flight management system) is needed for a RNP (required navigation performance) approach. When there is a loss of functionality with a system on which a selected approach procedure is reliant, the flight crew must select another approach procedure. If the failure occurs in the middle of performing the approach procedure, the workload for selecting another approach procedure may be extremely high and may create a significant burden on the flight crew. Changing to another approach procedure involves taking time to choose an appropriate replacement approach procedure and performing the task of selecting and activating the procedure using a MCDU (multi-function control and display unit) or flight plan page on a graphical display during a busy time for a flight crew. Additionally, there is a risk that the flight crew may not notice a system failure necessitating a switch to another approach procedure in timely fashion.

Hence, it is desirable to provide systems and methods for automatically detecting the need to switch to an alternate approach procedure, automatically announcing to the flight crew alternate approach procedures for the same runway, prioritizing the alternate approach procedures in a reasonable way, and providing the flight crew with a quick way to select and activate the appropriate procedure. Furthermore, other desirable features and characteristics of the present invention will become apparent from the subsequent detailed description and the appended claims, taken in conjunction with the accompanying drawings and the foregoing technical field and background.

EP1352315 discloses systems, apparatus and methods for entering data into a flight plan entry field which facilitates the display and editing of aircraft flight-plan data. Including a method for entering multiple waypoint and procedure identifiers at once within a single flight plan entry field. It may also include automatically providing the aircraft with selectable prioritized arrival and approach routing identifiers by a single manual selection. In another embodiment, the method provides the aircraft operator with selectable alternate patterns to a new runway.

US6112141 discloses an aircraft display and control system includes a computer, a trackball and selection device, an aeronautical information database, a geographic database, and a plurality of flat panel display devices. The aircraft crew can perform flight plan entry and modification by manipulating graphical information on the display devices using cursor control.

This summary is provided to describe select concepts in a simplified form that are further described in the Detailed Description. This summary is not intended to identify key or essential features of the claimed subject matter, nor is it intended to be used as an aid in determining the scope of the claimed subject matter.

A processor-implemented method in an aircraft for automatically providing alternate approach procedures is disclosed. The method includes determining, by a processor in the aircraft, that a scheduled first approach procedure with a first runway cannot be performed; identifying, by the processor, a plurality of alternate approach procedures for use with the first runway; ranking, by the processor, the alternate approach procedures based on changes from the first approach procedure, wherein the alternate approach procedure that exhibits the least amount of change from the first approach procedure is the highest ranked alternate approach procedure; causing the ranked alternate approach procedures to be displayed on a cockpit display; receiving, by the processor, a selection of a ranked alternate approach procedure; and activating, by the processor, the selected approach procedure.

An approach procedure module in an aircraft is disclosed. The approach procedure module includes one or more processors configured by programming instructions in non-transient computer readable media. The approach procedure module is configured to: determine that a scheduled first approach procedure with a first runway cannot be performed; identify a plurality of alternate approach procedures for use with the first runway; rank the alternate approach procedures based on changes from the first approach procedure; cause the ranked alternate approach procedures to be displayed on a cockpit display; receive a selection of a ranked alternate approach procedure; and automatically activate the selected approach procedure.

Furthermore, other desirable features and characteristics will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 is a block diagram depicting example aircraft equipment for an example system configured to provide prioritized alternate approach procedures in an aircraft, in accordance with some embodiments;
FIG. 2 is a process flow chart depicting an example process in an example system configured to provide prioritized alternate approach procedures in an aircraft, in accordance with some embodiments;
FIG. 3 is a process flow chart depicting an example process in aircraft equipment for automatically generating a prioritized listing of alternate approach procedures, in accordance with some embodiments;
FIG. 4 is a process flow chart depicting an example process in aircraft equipment for automatically implementing an alternate approach procedure, in accordance with some embodiments;
FIG. 5 is a process flow chart depicting another example process in aircraft equipment for automatically implementing an alternate approach procedure, in accordance with some embodiments;
FIG. 6 is a process flow chart depicting another example process in aircraft equipment for automatically implementing an alternate approach procedure, in accordance with some embodiments;
FIG. 7 is a process flow chart depicting another example process in aircraft equipment for automatically implementing an alternate approach procedure, in accordance with some embodiments; and
FIG. 8 is a process flow chart depicting another example process in aircraft equipment for automatically implementing an alternate approach procedure, in accordance with some embodiments.

### DETAILED DESCRIPTION

The following detailed description is merely exemplary in nature and is not intended to limit the application and uses. Furthermore, there is no intention to be bound by any expressed or implied theory presented in the preceding technical field, background, summary, or the following detailed description. As used herein, the term "module" refers to any hardware, software, firmware, electronic control component, processing logic, and/or processor device, individually or in any combination, including without limitation: application specific integrated circuit (ASIC), a field-programmable gate-array (FPGA), an electronic circuit, a processor (shared, dedicated, or group) and memory that executes one or more software or firmware programs, a combinational logic circuit, and/or other suitable components that provide the described functionality.

Embodiments of the present disclosure may be described herein in terms of functional and/or logical block components and various processing steps. It should be appreciated that such block components may be realized by any number of hardware, software, and/or firmware components configured to perform the specified functions. For example, an embodiment of the present disclosure may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments of the present disclosure may be practiced in conjunction with any number of systems, and that the systems described herein is merely exemplary embodiments of the present disclosure.

For the sake of brevity, conventional techniques related to signal processing, data transmission, signaling, control, touchscreens, and other functional aspects of the systems (and the individual operating components of the systems) may not be described in detail herein. Furthermore, the connecting lines shown in the various figures contained herein are intended to represent example functional relationships and/or physical couplings between the various elements. It should be noted that many alternative or additional functional relationships or physical connections may be present in an embodiment of the present disclosure.

Described herein are systems, methods, apparatus, and techniques that are configured to prioritize alternate approach procedures for use with a currently selected runway when a currently selected approach procedure can no longer be performed. The prioritization can be made based on the configuration and/or status of various aircraft systems (*e.g*., SBAS (satellite-based augmentation system) availability, FMS (flight management system) availability, ILS (instrument landing system) availability, *etc.*)*,* the extent or impact of the change to the flight plan if an alternate approach procedure is implemented (*e.g*., the course change, the distance to the closest fix, the phase of flight, fuel consumption, flight time, *etc.*), and an attribute of the procedure (*e.g.*, MDA (minimum descent altitude) or DH (decision height), *etc.*).

The systems, methods, apparatus, and techniques described herein can be used to provide a flight crew with a prioritized listing of alternate approach procedures. The alternate approach procedure with the highest priority can be highlighted. The flight crew can choose to select the alternate approach procedure designated as having the highest priority or may choose to select another alternate approach procedure for use. Once selected, the selected approach procedure may be inserted into the flight plan automatically.

The systems, methods, apparatus, and techniques described herein can generate a listing of alternate approach procedures that only includes approach procedures that are supported by the current system configuration and status. Potential approach procedures that are not supported by the current system configuration and status may be eliminated from consideration thereby reducing the possibility of attempting to implement an unsafe approach procedure.

The systems, methods, apparatus, and techniques described herein can provide a prioritized listing of alternate approach procedures that are prioritized based on the extent or impact of the flight plan change necessitated by the alternate approach procedure (e.g., considering less course change, less distance to the closest fix, the phase of flight, lower fuel consumption, saving flight time, or a combination of multiple conditions, and others) and an attribute of the approach procedures. The alternate approach procedures listing can be organized such that the highest prioritized procedure is listed first and the lowest prioritized procedure is listed last on the listing, which can allow the flight crew to more quickly choose an alternate approach procedure for use.

The systems, methods, apparatus, and techniques described herein can provide the flight crew with the ability to activate a selected alternate approach procedure with one click thereby minimizes the impact of activating an alternate approach procedure to the flight crew's workload.

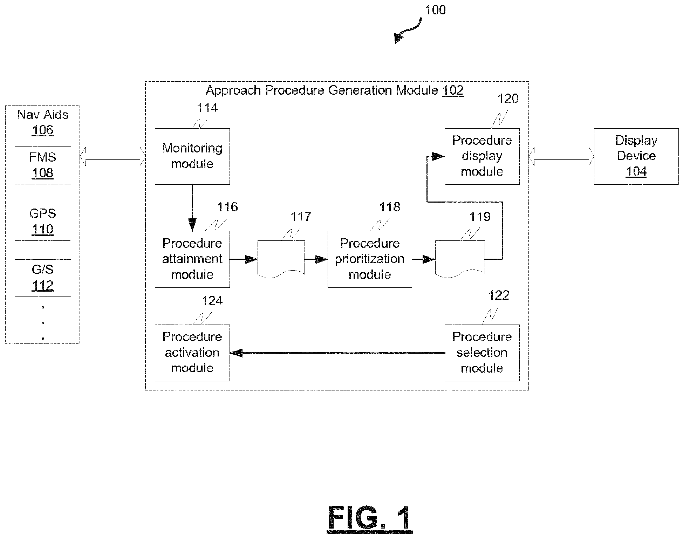

FIG. 1 is a block diagram depicting example aircraft equipment 100 for an example system configured to provide prioritized alternate approach procedures in an aircraft. The example equipment 100 includes an approach procedure generation module 102, an aircraft display device 104, such as a pure display unit, a multi-function control and display unit (MCDU), or a touchscreen control system (TCS), and navigational aids 106 such as a flight management system (FMS) 108, a GPS receiver 110, and a G/S (glide slope) receiver 112. The navigational aids 106 may also include a VHF omni directional radio range (VOR) receiver (not shown) and an Instrument landing system localizer (LOC) receiver (not shown).

The example approach procedure generation module 102 is configured to monitor aircraft systems such as navigational aids 106 when a currently selected approach procedure has been established to ensure that the monitored aircraft systems are functioning sufficiently to allow the currently selected approach procedure to be safely performed. The example approach procedure generation module 102 is further configured to detect when an aircraft system failure has occurred that necessitates that a new approach procedure be selected, attain potential approach procedures for the currently selected runway, determine which of those potential approach procedures may be performed based on the configuration and status of the aircraft systems, select alternate approach procedures from the potential approach procedures, prioritize the alternate approach procedures, and provide the prioritized, alternate approach procedures to the flight crew for selection by the flight crew of one of the alternate approach procedures. The example approach procedure generation module 102 is additionally configured to receive the selection of the selected alternate approach procedure and cause the selected alternate approach procedure to be activated in the aircraft. The example approach procedure generation module 102 includes a monitoring module 114, a procedure attainment module 116, a procedure prioritization module 118, a procedure display module 120, a procedure selection module 122, and a procedure activation module 124.

The example approach procedure generation module 102 includes a controller that is configured to implement the monitoring module 114, the procedure attainment module 116, the procedure prioritization module 118, the procedure display module 120, the procedure selection module 122, and the procedure activation module 124. The controller includes at least one processor and a computer-readable storage device or media encoded with programming instructions for configuring the controller. The processor may be any custom-made or commercially available processor, a central processing unit (CPU), a graphics processing unit (GPU), an application specific integrated circuit (ASIC), a field programmable gate array (FPGA), an auxiliary processor among several processors associated with the controller, a semiconductor-based microprocessor (in the form of a microchip or chip set), any combination thereof, or generally any device for executing instructions.

The computer readable storage device or media may include volatile and nonvolatile storage in read-only memory (ROM), random-access memory (RAM), and keep-alive memory (KAM), for example. KAM is a persistent or non-volatile memory that may be used to store various operating variables while the processor is powered down. The computer-readable storage device or media may be implemented using any of a number of known memory devices such as PROMs (programmable read-only memory), EPROMs (electrically PROM), EEPROMs (electrically erasable PROM), flash memory, or any other electric, magnetic, optical, or combination memory devices capable of storing data, some of which represent executable programming instructions, used by the controller.

The example monitoring module 114 is configured to monitor the configuration and status of a plurality of aircraft systems necessary for the aircraft to perform a currently selected approach procedure with a selected runway and determine when the currently selected approach procedure cannot be performed based on the configuration or status of one or more of the plurality of monitored aircraft systems. The example monitoring module 114 may determine that the configuration or status of at least one of the aircraft systems has changed and the aircraft can no longer perform the currently selected approach procedure because of the change.

The example procedure attainment module 116 is configured to retrieve a plurality of potential approach procedures for use with the selected runway. The example procedure attainment module 116 may retrieve the plurality of potential approach procedures from a navigation database on the aircraft and may generate a listing 117 of the potential approach procedures.

The example procedure prioritization module 118 is configured to generate a prioritized listing 119 of alternate approach procedures for use with the selected runway. The example procedure prioritization module 118 may be configured to identify the alternate approach procedures by determining which of the potential approach procedures the aircraft may perform and may be configured to eliminate from consideration, as an alternate approach procedure, those potential approach procedures that cannot be performed with the current configuration and status of the aircraft systems.

The example procedure prioritization module 118 is further configured to rank the alternate approach procedures based on changes from the currently selected approach procedure. The alternate approach procedure that exhibits the least amount of change from the currently selected approach procedure may be ranked as the highest ranked alternate approach procedure. The example procedure prioritization module 118 is configured to identify a highest priority alternate approach procedure from the ranked alternate procedures. In some examples, the procedure prioritization module 118 may be configured to rank the alternate approach procedures based on differences between the currently selected approach procedure and the alternate approach procedures if it is determined during a phase of flight other than approach that the currently selected approach procedure cannot be performed. In some examples, the procedure prioritization module 118 may be configured to rank the alternate approach procedures based on differences between the currently selected approach procedure and the alternate approach procedures if it is determined during the approach phase of flight that the currently selected approach procedure cannot be performed.

The example procedure display module 120 is configured to cause the ranked alternate approach procedures to be displayed to the flight crew on a cockpit display such as a pure display unit, a MCDU, or a TCS. The example procedure display module 120 may be configured to cause the highest ranked alternate approach procedure to be highlighted when the ranked alternate approach procedures are displayed on a cockpit display.

The example procedure selection module 122 is configured to receive a selection of a ranked alternate approach procedure from the flight crew. The selection may be made by a one-touch actuation of a button or switch on a cockpit display such as a pure display unit, a MCDU, or a TCS.

The example procedure activation module 124 is configured to cause the selected approach procedure to be activated. The example procedure activation module 124 may be configured to automatically activate the selected approach procedure upon receipt of flight crew's selection of a ranked alternate approach procedure.

The automatic provision of ranked alternate approach procedures coupled with the automatic activation of a selected approach procedure may significantly reduce a flight crew's workload when equipment failure necessitates that an alternate approach procedure be selected and activated. The flight crew may be alerted of the need to select an alternate approach procedure sooner and an alternate approach procedure may be activated much quicker resulting in reduced flight crew workload and increased aircraft safety.

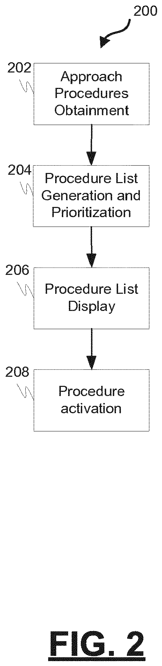

FIG. 2 is a process flow chart depicting an example process 200 in an example system configured to provide prioritized alternate approach procedures in an aircraft. The order of operation within the process is not limited to the sequential execution as illustrated in the figure, but may be performed in one or more varying orders as applicable and in accordance with the present disclosure. In various embodiments, the process can be scheduled to run based on one or more predetermined events, and/or can run continuously during operation of the aircraft.

The example process 200 can be initiated when it is determined that the currently selected approach procedure with a currently selected runway cannot be performed. The example process 200 includes approach procedures attainment (operation 202). Approach procedures obtainment may involve acquiring, from a navigation database, all potential approach procedures related to the currently selected runway.

The example process 200 includes procedure list generation and prioritization (operation 204). Procedure list generation and prioritization involves generating a prioritized approach procedures list by eliminating the procedures which are not supported by the current system configuration and status and prioritizing the non-eliminated procedures based on the extent or impact of the procedure's change to the current flight plan and the attributes of the procedures. As an example, procedures with lower course change, lower distance to the closest fix, lower fuel consumption, or lower time consumption may be given a higher prioritization. Also, the phase of flight and other criteria may be considered for prioritization. When considering multiple conditions, a risk factor can be calculated for each procedure, and H0061407 - EP the procedure with lowest risk factor can be determined to be the most appropriate approach procedure.

The example process 200 includes procedure list display (operation 206). Procedure list display may involve causing the prioritized approach procedures list to be displayed on a display such as an MCDU or relevant display pages for viewing by the flight crew.

The example process 200 also includes procedure activation (operation 208). Procedure activation involves inserting and activating a pilot selected approach procedure into the active flight plan.

The prioritization of the approach procedures can be based on the change in one condition or the change in multiple conditions necessitated by the approach procedure. The conditions may include the change in the MDA or DH value, the relative course change, the distance to the closest fix in the approach, the change in fuel consumption, the change in flight time, the phase of flight, and others. The approach procedures with a lower MDA or DH value, less course change, less distance to the closest fix in the approach, less fuel consumption, or less time consumption may be prioritized higher. Also, the phase of flight may be considered during prioritization.

In one example, when prioritization is based on a single condition, the priority determination may be based on the MDA or DH value during the enroute phase of the flight. In another example, when prioritization is based on a single condition, the priority determination may be based on course change during the approach phase of flight. In the approach phase of flight, to minimize the effect of a change on the flight crew workload, it may be more advantageous for the alternate approach procedure to be more similar to the current approach procedure.

In another example, when prioritization is based on a combination of several conditions, each approach procedure may be assigned a risk factor. The approach procedure with the lowest risk factor may be deemed the most appropriate procedure and selected as the highest priority procedure. The risk factor can be calculated by assigning a value and weight for each condition. For example, an approach procedure with a course change of 1 to 5 degrees may be assigned a value of 1 and an approach procedure with a course change of 5 to 10 degrees may be assigned a value of 2. The weight for a condition may be assigned based on the relative importance of the condition to the approach procedures prioritization. If the condition is more important, then a lower weight can be assigned to the condition. For example, the weight for the course change condition can be 1, while the weight for the phase of flight condition can be 10 if the course change condition is more important than the phase of flight condition in the prioritization.

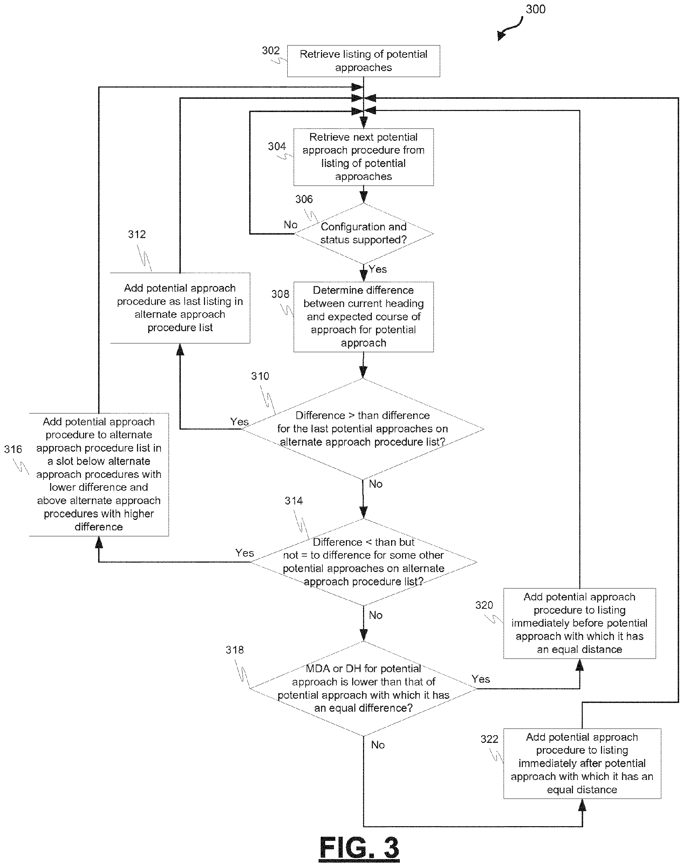

FIG. 3 is a process flow chart depicting an example process 300 in aircraft equipment for automatically generating a prioritized listing of alternate approach procedures. The example process 300 prioritizes alternate approach procedures based on minimizing course change and uses MDA or DH values to distinguish between alternate approach procedures when the course change resulting from multiple alternate approach procedures are equal. The order of operation within the process is not limited to the sequential execution as illustrated in the figure, but may be performed in one or more varying orders as applicable and in accordance with the present disclosure. In various embodiments, the process can be scheduled to run based on one or more predetermined events, and/or can run continuously during operation of the aircraft.

The example process 300 includes retrieving a listing of potential approaches (operation 302). The listing of potential approaches may be retrieved from a navigation database on the aircraft. From the listing of potential approaches, the potential approach procedures are retrieved one at a time with the next potential approach procedure being retrieved from listing of potential approaches (operation 304). A determination is made regarding whether the retrieved potential approach may be performed based on the status and configuration of aircraft systems necessary for the performance of the approach procedure (decision 306). If the retrieved potential approach cannot be performed based on the status and configuration of aircraft systems necessary for the performance of the approach procedure (no at decision 306), then the next potential approach procedure is retrieved from listing of potential approaches (operation 304). If the retrieved potential approach can be performed based on the status and configuration of aircraft systems necessary for the performance of the approach procedure (yes at decision 306), then the difference between the current heading with the current approach procedure and the expected course of approach for the potential approach is determined (operation 308).

A determination is made regarding whether the difference between the current heading with the current approach procedure and the expected course of approach for the potential approach is greater than the difference for other potential approach procedure on an alternate approach procedure listing (decision 310). If the difference is greater than the current last listed potential approach procedures on the alternate approach listing (yes at decision 310), then the potential approach procedure is added to the listing of alternate approach procedures as the last listing (operation 312). The next potential approach procedure is then retrieved for consideration (operation 304).

If the difference is not greater than other potential approach procedures on the alternate approach listing (no at decision 306), then a determination is made regarding whether the difference is less than but not equal to the difference for other potential approaches on the alternate approach procedure list (decision 314). If the difference is less than but not equal to the difference for some other potential approaches on the alternate approach procedure list (yes at decision 314), then the potential approach procedure is added to the alternate approach procedure listing in a slot below the alternate approach procedures with a lower difference and above the alternate approach procedures with a higher difference (operation 316). The next potential approach procedure is then retrieved for consideration (operation 304).

If the difference is equal to the difference for some other potential approaches on the alternate approach procedure list (no at decision 314), then a determination is made regarding whether the MDA or DH value for the potential approach is lower than that of the potential approach(es) with which it has an equal difference (decision 318). If the MDA or DH value for the potential approach is lower than that of the potential approach(es) with which it has an equal difference (yes at decision 318), then the potential approach procedure is added to the alternate approach listing immediately before the potential approach(es) with which it has an equal distance (operation 320). The next potential approach procedure is then retrieved for consideration (operation 304). If the MDA or DH value for the potential approach is not lower than that of the potential approach(es) with which it has an equal difference (no at decision 318), then the potential approach procedure is added to the alternate approach listing immediately after the potential approach(es) with which it has an equal distance (operation 322). The next potential approach procedure is then retrieved for consideration (operation 304).

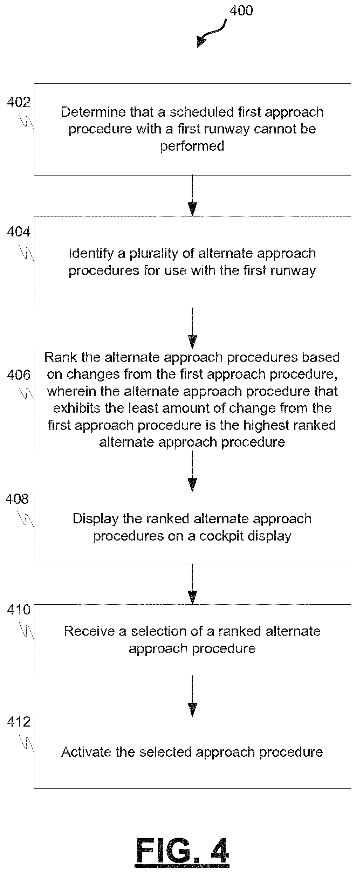

FIG. 4 is a process flow chart depicting an example process 400 in aircraft equipment for automatically implementing an alternate approach procedure. The order of operation within the process is not limited to the sequential execution as illustrated in the figure, but may be performed in one or more varying orders as applicable and in accordance with the present disclosure. In various embodiments, the process can be scheduled to run based on one or more predetermined events, and/or can run continuously during operation of the aircraft.

The example process 400 includes determining that a scheduled first approach procedure with a first runway cannot be performed (operation 402). When a scheduled first approach procedure has been selected and activated, flight equipment, such as navigational aids, may be monitored to determine if conditions have changed that would prevent the aircraft from performing the first approach procedure. If it is determined that aircraft conditions exist that would prevent the aircraft from performing the first approach procedure, the example process 400 includes identifying a plurality of alternate approach procedures for use with the first runway (operation 404).

The example process 400 further includes ranking the alternate approach procedures based on changes from the first approach procedure, wherein the alternate approach procedure that exhibits the least amount of change from the first approach procedure is the highest ranked alternate approach procedure (operation 406). The ranked alternate approach procedures may be displayed to the flight crew on a cockpit display (operation 408). The flight crew may then select an alternate approach procedure to execute. The selection of a ranked alternate approach procedure is received (operation 410) and the selected approach procedure may be automatically activated (operation 412).

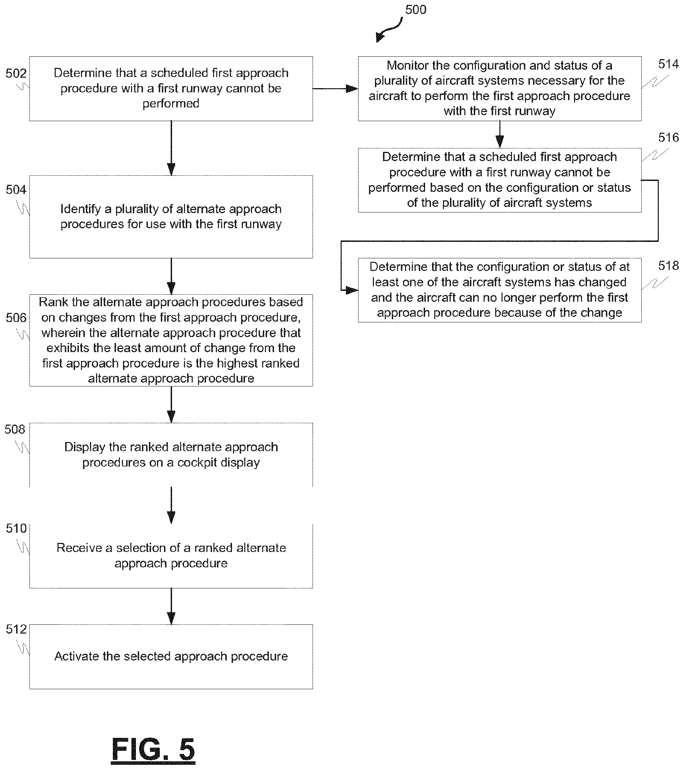

FIG. 5 is a process flow chart depicting another example process 500 in aircraft equipment for automatically implementing an alternate approach procedure. The order of operation within the process is not limited to the sequential execution as illustrated in the figure, but may be performed in one or more varying orders as applicable and in accordance with the present disclosure. In various embodiments, the process can be scheduled to run based on one or more predetermined events, and/or can run continuously during operation of the aircraft.

The example process 500 includes operations similar to the operations of example process 400. The example process 500 includes determining that a scheduled first approach procedure with a first runway cannot be performed (operation 502), identifying a plurality of alternate approach procedures for use with the first runway (operation 504), ranking the alternate approach procedures based on changes from the first approach procedure, wherein the alternate approach procedure that exhibits the least amount of change from the first approach procedure is the highest ranked alternate approach procedure (operation 506), causing the ranked alternate approach procedures to be displayed to the flight crew on a cockpit display (operation 508), receiving a selection of a ranked alternate approach procedure from the flight crew (operation 510), and automatically activating the selected approach procedure (operation 512).

In the example process 500, determining that a scheduled first approach procedure with a first runway cannot be performed includes monitoring the configuration and status of a plurality of aircraft systems necessary for the aircraft to perform the first approach procedure with the first runway (decision 514). The aircraft systems may include navigational aids such as the FMS, a GPS receiver, a G/S receiver, a VOR receiver, a LOC receiver, and others.

The example process 500 further includes determining that a scheduled first approach procedure with a first runway cannot be performed based on the configuration or status of the plurality of aircraft systems (operation 516). As an example, the loss of FMS functionality may prevent a RNP (required navigation performance) approach procedure. The loss of SBAS functionality in the GPS receiver may prevent the performance of a LPV (localizer performance with vertical guidance) approach procedure. And, the loss of functionality in a G/S receiver may prevent the performance of an ILS approach procedure. In the example process 500, determining that a scheduled first approach procedure with a first runway cannot be performed based on the configuration or status of the plurality of aircraft systems may involve determining that the configuration or status of at least one of the aircraft systems has changed and the aircraft can no longer perform the first approach procedure because of the change (operation 518).

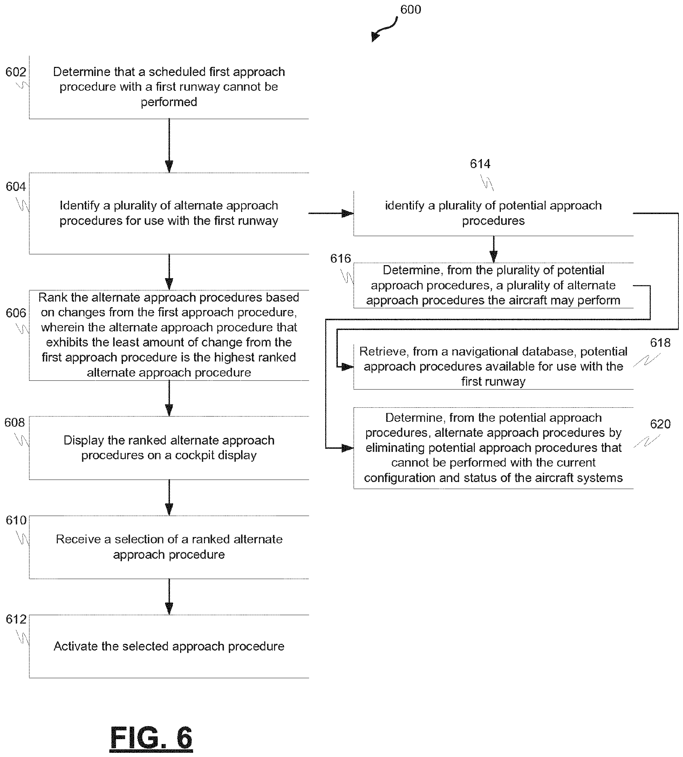

FIG. 6 is a process flow chart depicting another example process 600 in aircraft equipment for automatically implementing an alternate approach procedure. The order of operation within the process is not limited to the sequential execution as illustrated in the figure, but may be performed in one or more varying orders as applicable and in accordance with the present disclosure. In various embodiments, the process can be scheduled to run based on one or more predetermined events, and/or can run continuously during operation of the aircraft.

The example process 600 includes operations similar to the operations of example process 400. The example process 600 includes determining that a scheduled first approach procedure with a first runway cannot be performed (operation 602), identifying a plurality of alternate approach procedures for use with the first runway (operation 604), ranking the alternate approach procedures based on changes from the first approach procedure, wherein the alternate approach procedure that exhibits the least amount of change from the first approach procedure is the highest ranked alternate approach procedure (operation 606), causing the ranked alternate approach procedures to be displayed to the flight crew on a cockpit display (operation 608), receiving a selection of a ranked alternate approach procedure from the flight crew (operation 610), and automatically activating the selected approach procedure (operation 612).

In the example process 600, identifying a plurality of alternate approach procedures for use with the first runway includes identifying a plurality of potential approach procedures (operation 614) and determining, from the plurality of potential approach procedures, a plurality of alternate approach procedures the aircraft may perform (operation 616). Identifying a plurality of potential approach procedures (operation 614) may involve retrieving, from a navigation database, potential approach procedures available for use with the first runway (operation 618). determining, from the plurality of potential approach procedures, a plurality of alternate approach procedures the aircraft may perform (operation 616) may involve determining, from the potential approach procedures, alternate approach procedures by eliminating potential approach procedures that cannot be performed with the current configuration and status of the aircraft systems (operation 620).

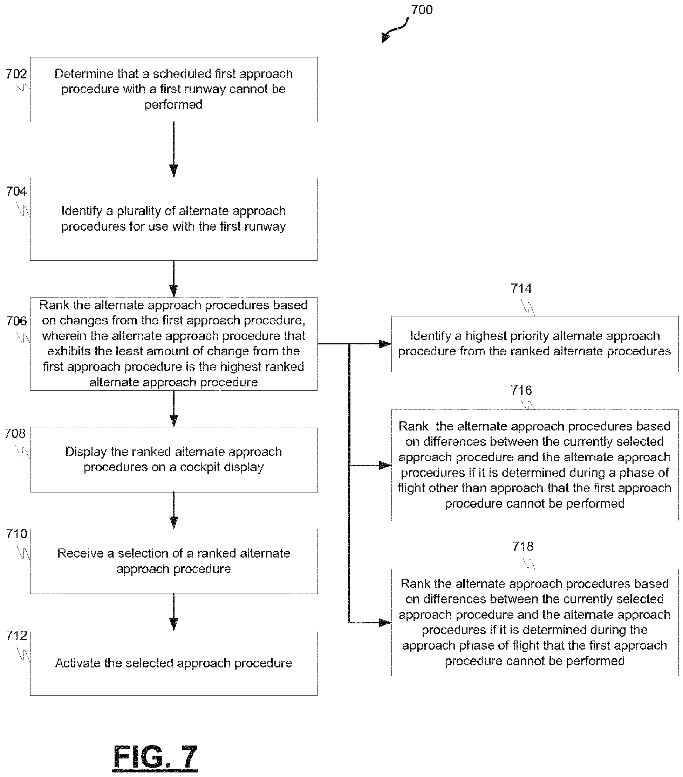

FIG. 7 is a process flow chart depicting another example process 700 in aircraft equipment for automatically implementing an alternate approach procedure. The order of operation within the process is not limited to the sequential execution as illustrated in the figure, but may be performed in one or more varying orders as applicable and in accordance with the present disclosure. In various embodiments, the process can be scheduled to run based on one or more predetermined events, and/or can run continuously during operation of the aircraft.

The example process 700 includes operations similar to the operations of example process 400. The example process 700 includes determining that a scheduled first approach procedure with a first runway cannot be performed (operation 702), identifying a plurality of alternate approach procedures for use with the first runway (operation 704), ranking the alternate approach procedures based on changes from the first approach procedure, wherein the alternate approach procedure that exhibits the least amount of change from the first approach procedure is the highest ranked alternate approach procedure (operation 706), causing the ranked alternate approach procedures to be displayed to the flight crew on a cockpit display (operation 708), receiving a selection of a ranked alternate approach procedure from the flight crew (operation 710), and automatically activating the selected approach procedure (operation 712).

Ranking the alternate approach procedures based on changes from the first approach procedure, wherein the alternate approach procedure that exhibits the least amount of change from the first approach procedure is the highest ranked alternate approach procedure (operation 706), in the example process 700, may involve identifying a highest priority alternate approach procedure from the ranked alternate procedures (operation 714). Ranking the alternate approach procedures based on changes from the first approach procedure may also involve ranking the alternate approach procedures based on differences between the currently selected approach procedure and the alternate approach procedures if it is determined during a phase of flight other than approach that the first approach procedure cannot be performed (operation 716). When the determination is made at a phase of flight other than approach, ranking may comprise ranking the alternate approach procedures based on one or more of lower MDA value of the approach, lower DH value of the approach, less course change at IAF (initial approach fix), less fuel consumption, or less flight time. Ranking the alternate approach procedures based on changes from the first approach procedure may further involve ranking the alternate approach procedures based on differences between the currently selected approach procedure and the alternate approach procedures if it is determined during the approach phase of flight that the first approach procedure cannot be performed (operation 718). When the determination is made at the approach phase of flight, ranking may comprise ranking the alternate approach procedures based on one or more of lower MDA value of the approach, lower DH value of the approach, less course change, less distance to the closest fix in the approach, or less fuel consumption.

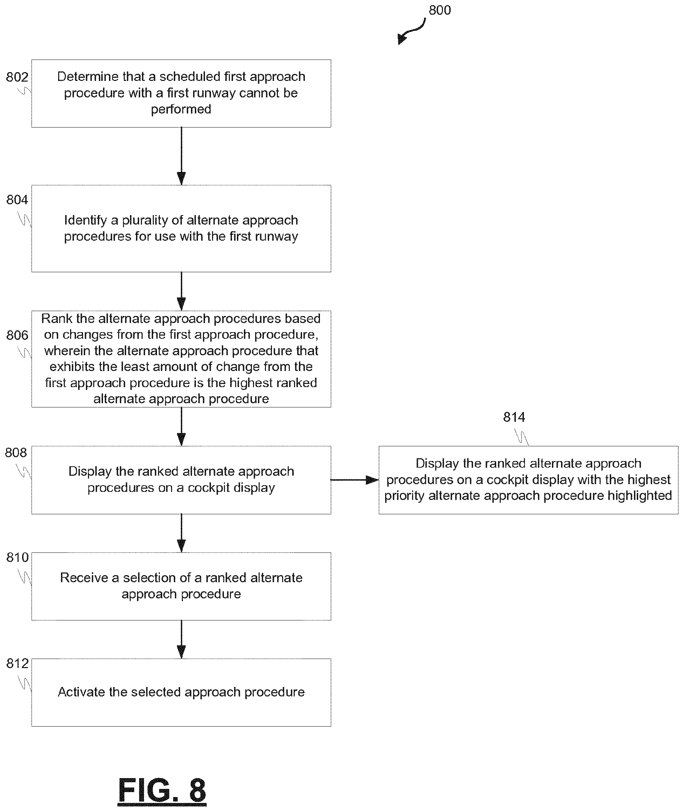

FIG. 8 is a process flow chart depicting another example process 800 in aircraft equipment for automatically implementing an alternate approach procedure. The order of operation within the process is not limited to the sequential execution as illustrated in the figure, but may be performed in one or more varying orders as applicable and in accordance with the present disclosure. In various embodiments, the process can be scheduled to run based on one or more predetermined events, and/or can run continuously during operation of the aircraft.

The example process 800 includes operations similar to the operations of example process 400. The example process 800 includes determining that a scheduled first approach procedure with a first runway cannot be performed (operation 802), identifying a plurality of alternate approach procedures for use with the first runway (operation 804), ranking the alternate approach procedures based on changes from the first approach procedure, wherein the alternate approach procedure that exhibits the least amount of change from the first approach procedure is the highest ranked alternate approach procedure (operation 806), causing the ranked alternate approach procedures to be displayed to the flight crew on a cockpit display (operation 808), receiving a selection of a ranked alternate approach procedure from the flight crew (operation 810), and automatically activating the selected approach procedure (operation 812).

In the example process 800, causing the ranked alternate approach procedures to be displayed to the flight crew on a cockpit display (operation 808) may involve causing the ranked alternate approach procedures to be displayed on a cockpit display with the highest priority alternate approach procedure highlighted (decision 814).

Described herein are techniques for providing a prioritized approach procedure list for the same current selected runway when the system supporting the current selected approach procedure fails. The display of the prioritized list can not only alert the flight crew that there is something wrong within the system that makes the currently selected approach procedure unsafe to fly, but may also allow the flight crew to choose a new approach procedure much more quickly. Also, the auto-activating capability can save time by not requiring the flight crew to manually select and manually activate an alternate approach procedure.

In one embodiment, a processor-implemented method in an aircraft for automatically providing alternate approach procedures is provided. The method comprises determining, by a processor in the aircraft, that a scheduled first approach procedure with a first runway cannot be performed; identifying, by the processor, a plurality of alternate approach procedures for use with the first runway; ranking, by the processor, the alternate approach procedures based on changes from the first approach procedure, wherein the alternate approach procedure that exhibits the least amount of change from the first approach procedure is the highest ranked alternate approach procedure; causing the ranked alternate approach procedures to be displayed on a cockpit display; receiving, by the processor, a selection of a ranked alternate approach procedure; and activating, by the processor, the selected approach procedure.

These aspects and other embodiments may include one or more of the following features. The method may further comprise monitoring, by the processor, the configuration and status of a plurality of aircraft systems necessary for the aircraft to perform the first approach procedure with the first runway. Determining that a scheduled first approach procedure with a first runway cannot be performed may comprise determining that a scheduled first approach procedure with a first runway cannot be performed based on the configuration or status of the plurality of aircraft systems. Determining that a scheduled first approach procedure with a first runway cannot be performed based on the configuration or status of the plurality of aircraft systems may comprise determining that the configuration or status of at least one of the aircraft systems has changed and the aircraft can no longer perform the first approach procedure because of the change. Identifying a plurality of alternate approach procedures for use with the first runway may comprise: identifying a plurality of potential approach procedures; and determining, from the plurality of potential approach procedures, a plurality of alternate approach procedures the aircraft may perform. Identifying a plurality of potential approach procedures may comprise retrieving, by the processor from a navigation database, potential approach procedures available for use with the first runway. Determining, from the plurality of potential approach procedures, a plurality of alternate approach procedures the aircraft may perform may comprise determining, from the potential approach procedures, alternate approach procedures by eliminating potential approach procedures that cannot be performed with the current configuration and status of the aircraft systems. Causing the ranked alternate approach procedures to be displayed on a cockpit display may comprise causing the ranked alternate approach procedures to be displayed on a cockpit display with the highest priority alternate approach procedure highlighted. Ranking the alternate approach procedures based on changes from the first approach procedure may comprise ranking the alternate approach procedures based on differences between the first approach procedure and the alternate approach procedures if it is determined at a phase of flight other than approach that the first approach procedure cannot be performed. Ranking the alternate approach procedures based on differences between the first approach procedure and the alternate approach procedures if it is determined at a phase of flight other than approach that the first approach procedure cannot be performed may comprise ranking the alternate approach procedures based on one or more of lower MDA (minimum descent altitude) value of the approach, lower DH (decision height) value of the approach, less course change at IAF (initial approach fix), less fuel consumption, or less flight time. Ranking the alternate approach procedures based on changes from the first approach procedure may comprise ranking the alternate approach procedures based on differences between the first approach procedure and the alternate approach procedures if it is determined during an approach phase of flight that the first approach procedure cannot be performed. Ranking the alternate approach procedures based on differences between the first approach procedure and the alternate approach procedures if it is determined during an approach phase of flight that the first approach procedure cannot be performed may comprise ranking the alternate approach procedures based on one or more of less course change, less fuel consumption, less distance to the closest fix in the approach, lower MDA (minimum descent altitude) value of the approach, or lower DH (decision height) value of the approach.

In another embodiment, an approach procedure module in an aircraft is provided. The approach procedure module comprises one or more processors configured by programming instructions in non-transient computer readable media. The approach procedure module is configured to: determine that a scheduled first approach procedure with a first runway cannot be performed; identify a plurality of alternate approach procedures for use with the first runway; rank the alternate approach procedures based on changes from the first approach procedure; display the ranked alternate approach procedures on a cockpit display; receive a selection of a ranked alternate approach procedure; and automatically activate the selected approach procedure.

These aspects and other embodiments may include one or more of the following features. The approach procedure module may be further configured to monitor the configuration and status of a plurality of aircraft systems necessary for the aircraft to perform the first approach procedure with the first runway. The approach procedure module may be further configured to determine that a scheduled first approach procedure with a first runway cannot be performed based on the configuration or status of the plurality of aircraft systems. The approach procedure module may be further configured to: identify a plurality of potential approach procedures; and determine, from the plurality of potential approach procedures, a plurality of alternate approach procedures the aircraft may perform. The approach procedure module may be further configured to determine, from the potential approach procedures, alternate approach procedures by eliminating potential approach procedures that cannot be performed with the current configuration and status of the aircraft systems. The aircraft systems may comprise a satellite-based augmentation system (SBAS) capable GPS (global positioning system) receiver, a flight management system (FMS), a glide slope (G/S) receiver for an instrument landing system (ILS), a VHF omni directional radio range (VOR) receiver, an instrument landing system localizer (LOC) receiver, or other systems. The approach procedure module may be further configured to rank the alternate approach procedures based on one or more of lower MDA (minimum descent altitude) value of the approach, lower DH (decision height) value of the approach, less course change, less distance to the closest fix in the approach, the phase of flight, less fuel consumption, or less flight time.

In another embodiment, non-transient computer readable media encoded with programming instructions configured to cause one or more processors in an aircraft to perform a method is provided. The method comprises: determining that a scheduled first approach procedure with a first runway cannot be performed; identifying a plurality of alternate approach procedures for use with the first runway; ranking the alternate approach procedures based on changes from the first approach procedure, wherein the alternate approach procedure that exhibits the least amount of change from the first approach procedure is the highest ranked alternate approach procedure; causing the ranked alternate approach procedures to be displayed on a cockpit display; receiving a selection of a ranked alternate approach procedure; and automatically activating the selected approach procedure.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application. For example, an embodiment of a system or a component may employ various integrated circuit components, *e.g*., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, *e.g.,* a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples.

## Claims

1. A processor-implemented method in an aircraft for automatically providing alternate approach procedures, the method comprising:
determining, by a processor in the aircraft, that a scheduled first approach procedure with a first runway cannot be performed (802);
identifying, by the processor, a plurality of alternate approach procedures for use with the first runway (804);
ranking, by the processor, the alternate approach procedures based on changes from the first approach procedure, wherein the alternate approach procedure that exhibits the least amount of change from the first approach procedure is the highest ranked alternate approach procedure (806);
causing the ranked alternate approach procedures to be displayed on a cockpit display (808);
receiving, by the processor, a selection of a ranked alternate approach procedure (810); and
activating, by the processor, the selected approach procedure (812).

2. The method of claim 1, further comprising monitoring, by the processor, the configuration and status of a plurality of aircraft systems necessary for the aircraft to perform the first approach procedure with the first runway (514), and wherein determining that a scheduled first approach procedure with a first runway cannot be performed comprises determining that a scheduled first approach procedure with a first runway cannot be performed based on the configuration or status of the plurality of aircraft systems (516).

3. The method of claim 2, wherein determining that a scheduled first approach procedure with a first runway cannot be performed based on the configuration or status of the plurality of aircraft systems comprises determining that the configuration or status of at least one of the aircraft systems has changed and the aircraft can no longer perform the first approach procedure because of the change (518).

4. The method of claim 1, wherein the identifying a plurality of alternate approach procedures for use with the first runway comprises:
identifying a plurality of potential approach procedures; and
determining, from the plurality of potential approach procedures, a plurality of alternate approach procedures the aircraft may perform.

5. The method of claim 4, wherein determining, from the plurality of potential approach procedures, a plurality of alternate approach procedures the aircraft may perform comprises determining, from the potential approach procedures, alternate approach procedures by eliminating potential approach procedures that cannot be performed with the current configuration and status of the aircraft systems (516).

6. The method of claim 1, wherein causing the ranked alternate approach procedures to be displayed on a cockpit display comprises causing the ranked alternate approach procedures to be displayed on a cockpit display with the highest priority alternate approach procedure highlighted (814).

7. The method of claim 1, wherein ranking the alternate approach procedures comprises ranking the alternate approach procedures based on one or more of lower MDA (minimum descent altitude) value of the approach, lower DH (decision height) value of the approach, less course change at IAF (initial approach fix), less fuel consumption, or less flight time.

8. The method of claim 4, wherein identifying a plurality of potential approach procedures comprises retrieving, by the processor from a navigation database, potential approach procedures available for use with the first runway.

9. The method of claim 8, wherein ranking the alternate approach procedures comprises ranking the alternate approach procedures based on one or more of less course change, less fuel consumption, less distance to the closest fix in the approach, lower MDA (minimum descent altitude) value of the approach, or lower DH (decision height) value of the approach.

10. An approach procedure module (102) in an aircraft, comprising one or more processors configured by programming instructions in non-transient computer readable media, the approach procedure module (102) configured to:
determine that a scheduled first approach procedure with a first runway cannot be performed (802);
identify a plurality of alternate approach procedures for use with the first runway (804);
rank the alternate approach procedures based on changes from the first approach procedure (806);
display the ranked alternate approach procedures on a cockpit display (808);
receive a selection of a ranked alternate approach procedure (810); and
automatically activate the selected approach procedure (812).

## Patentansprüche

1. Prozessorimplementiertes Verfahren in einem Flugzeug zum automatischen Bereitstellen alternativer Anflugverfahren, wobei das Verfahren umfasst:
Bestimmen durch einen Prozessor in dem Flugzeug, dass ein geplantes erstes Anflugverfahren mit einer ersten Landebahn nicht durchgeführt werden kann (802);
Identifizieren mehrerer alternativer Anflugverfahren durch den Prozessor zur Verwendung mit der ersten Landebahn (804);
Einstufen der alternativen Anflugverfahren basierend auf Änderungen gegenüber dem ersten Anflugverfahren durch den Prozessor, wobei das alternative Anflugverfahren, das die geringste Änderungsmenge gegenüber dem ersten Anflugverfahren aufweist, das am höchsten eingestufte alternative Anflugverfahren ist (806);
Bewirken, dass die eingestuften alternativen Anflugverfahren auf einer Cockpit-Anzeige angezeigt werden (808);
Empfangen einer Auswahl eines eingestuften alternativen Anflugverfahrens durch den Prozessor (810); und
Aktivieren des ausgewählten Anflugverfahrens durch den Prozessor (812).

2. Verfahren nach Anspruch 1, ferner umfassend das Überwachen der Konfiguration und des Status mehrerer Flugzeugsysteme durch den Prozessor, die erforderlich sind, damit das Flugzeug das erste Anflugverfahren mit der ersten Landebahn (514) durchführt, und wobei das Bestimmen, dass ein geplantes erstes Anflugverfahren mit einer ersten Landebahn nicht durchgeführt werden kann, das Bestimmen, dass ein geplantes erstes Anflugverfahren mit einer ersten Landebahn nicht durchgeführt werden kann, basierend auf der Konfiguration oder dem Status der mehreren Flugzeugsysteme (516) umfasst.

3. Verfahren nach Anspruch 2, wobei das Bestimmen, dass ein geplantes erstes Anflugverfahren mit einer ersten Landebahn nicht durchgeführt werden kann, basierend auf der Konfiguration oder dem Status der mehreren Flugzeugsysteme das Bestimmen umfasst, dass sich die Konfiguration oder der Status mindestens eines der Flugzeugsysteme geändert hat und dass das Flugzeug aufgrund der Änderung das erste Anflugverfahren nicht mehr durchführen kann (518).

4. Verfahren nach Anspruch 1, wobei das Identifizieren mehrerer alternativer Anflugverfahren zur Verwendung mit der ersten Landebahn umfasst:
Identifizieren mehrerer möglicher Anflugverfahren; und
Bestimmen der mehreren alternativen Anflugverfahren, die das das Flugzeug durchführen kann, aus den mehreren alternativen Anflugverfahren.

5. Verfahren nach Anspruch 4, wobei das Bestimmen der mehreren alternativen Anflugverfahren, die das das Flugzeug durchführen kann, aus den mehreren alternativen Anflugverfahren das Bestimmen alternativer Anflugverfahren aus den potenziellen Anflugverfahren umfasst, indem potenzielle Anflugverfahren eliminiert werden, die mit dem Flugzeug mit der aktuellen Konfiguration und dem aktuellen Status der Flugzeugsysteme (516) nicht durchgeführt werden können.

6. Verfahren nach Anspruch 1, wobei das Bewirken, dass die eingestuften alternativen Anflugverfahren auf einer Cockpit-Anzeige angezeigt werden, das Bewirken umfasst, dass die eingestuften alternativen Anflugverfahren auf einer Cockpit-Anzeige angezeigt werden, indem das alternative Anflugverfahren mit der höchsten Priorität hervorgehoben ist (814).

7. Verfahren nach Anspruch 1, wobei das Einstufen der alternativen Anflugverfahren das Einstufen der alternativen Anflugverfahren basierend auf einem oder mehreren des niedrigeren MDA-Werts (Sinkflugmindesthöhe-Werts) des Anflugs, des niedrigeren DH-Werts (Entscheidungshöhe-Werts) des Anflugs, weniger Kursänderungen bei IAF (Initial Approach Fix), weniger Kraftstoffverbrauch oder weniger Flugzeit umfasst.

8. Verfahren nach Anspruch 4, wobei das Identifizieren mehrerer potenzieller Anflugverfahren das Abrufen durch den Prozessor von potenziellen Anflugverfahren, die zur Verwendung mit der ersten Landebahn verfügbar sind, aus einer Navigationsdatenbank umfasst.

9. Verfahren nach Anspruch 8, wobei das Einstufen der alternativen Anflugverfahren das Einstufen der alternativen Anflugverfahren basierend auf einem oder mehreren von weniger Kursänderung, weniger Kraftstoffverbrauch, weniger Distanz zum nächsten Fix in dem Anflug, niedrigerem MDA-Wert (Sinkflugmindesthöhe-Wert) des Anflugs oder niedrigerem DH-Wert (Entscheidungshöhe-Wert) des Anflugs umfasst.

10. Anflugverfahrenmodul (102) in einem Flugzeug, umfassend einen oder mehrere Prozessoren, die durch Programmieranweisungen in nichtflüchtigen computerlesbaren Medien konfiguriert sind, wobei das Anflugverfahrenmodul (102) konfiguriert ist zum:
Bestimmen, dass ein geplantes erstes Anflugverfahren mit einer ersten Landebahn nicht durchgeführt werden kann (802);
Identifizieren mehrerer alternativer Anflugverfahren zur Verwendung mit der ersten Landebahn (804);
Einstufen der alternativen Anflugverfahren basierend auf Änderungen gegenüber dem ersten Anflugverfahren (806);
Anzeigen der eingestuften alternativen Anflugverfahren auf einer Cockpit-Anzeige (808);
Empfangen einer Auswahl eines eingestuften alternativen Anflugverfahrens (810); und
automatisches Aktivieren des ausgewählten Anflugverfahrens (812).

## Revendications

1. Procédé implémenté par un processeur dans un aéronef pour fournir automatiquement des procédures d'approche alternatives, le procédé comprenant :
la détermination, par un processeur de l'aéronef, qu'une première procédure d'approche planifiée ne peut pas être effectuée avec une première piste (802) ;
l'identification, par le processeur, d'une pluralité de procédures d'approche alternatives, à utiliser avec la première piste (804) ;
le classement, par le processeur, des procédures d'approche alternatives en fonction des changements de la première procédure d'approche, la procédure d'approche alternative qui présente le moins de changement par rapport à la première procédure d'approche étant la procédure d'approche alternative la mieux classée (806) ;
l'affichage des procédures d'approche alternatives classées sur un afficheur de cockpit (808) ;
la réception, par le processeur, d'une sélection d'une procédure d'approche alternative classée (810) ; et
l'activation, par le processeur, de la procédure d'approche sélectionnée (812).

2. Procédé selon la revendication 1, comprenant en outre la surveillance, par le processeur, de la configuration et de l'état d'une pluralité de systèmes d'aéronef nécessaires pour que l'aéronef exécute la première procédure d'approche avec la première piste (514) et dans lequel la détermination d'une première procédure d'approche planifiée avec une première piste ne peut pas être effectuée comprend la détermination qu'une première procédure d'approche planifiée ne peut pas être effectuée avec une première piste en fonction de la configuration ou de l'état de la pluralité de systèmes d'aéronef (516).

3. Procédé selon la revendication 2, dans lequel la détermination qu'une première procédure d'approche planifiée avec une première piste ne peut pas être effectuée en fonction de la configuration ou de l'état de la pluralité de systèmes d'aéronef comprend la détermination que la configuration ou l'état d'au moins l'un des systèmes d'aéronef a changé et que l'aéronef ne peut plus effectuer la première procédure d'approche en raison du changement (518).

4. Procédé selon la revendication 1, dans lequel l'identification d'une pluralité de procédures d'approche alternatives à utiliser avec la première piste comprend :
l'identification d'une pluralité de procédures d'approche potentielles ; et
la détermination, à partir de la pluralité de procédures d'approche potentielles, d'une pluralité de procédures d'approche alternatives que l'aéronef peut effectuer.

5. Procédé selon la revendication 4, dans lequel la détermination, à partir de la pluralité de procédures d'approche potentielles, d'une pluralité de procédures d'approche alternatives que l'aéronef peut effectuer comprend la détermination, à partir des procédures d'approche potentielles, de procédures d'approche alternatives par élimination des procédures d'approche potentielles qui ne peuvent pas être effectuées dans la configuration et l'état actuels des systèmes d'aéronef (516).

6. Procédé selon la revendication 1, dans lequel l'affichage des procédures d'approche alternatives classées sur un afficheur de cockpit comprend l'affichage des procédures d'approche alternatives classées sur un afficheur de cockpit, la procédure d'approche alternative de priorité la plus élevée étant mise en évidence (814).

7. Procédé selon la revendication 1, dans lequel le classement des procédures d'approche alternatives comprend le classement des procédures d'approche alternatives en fonction d'un ou plusieurs éléments parmi la moindre valeur de MDA (altitude de descente minimale) de l'approche, la moindre valeur de DH (hauteur de décision) de l'approche, le moindre changement de cap à l'IAF (repère initial d'approche), la moindre consommation de carburant ou le moindre temps de vol.

8. Procédé selon la revendication 4, dans lequel l'identification d'une pluralité de procédures d'approche potentielles comprend la récupération, par le processeur à partir d'une base de données de navigation, de procédures d'approche potentielles, disponibles pour une utilisation avec la première piste.

9. Procédé selon la revendication 8, dans lequel le classement des procédures d'approche alternatives comprend le classement des procédures d'approche alternatives en fonction d'un ou plusieurs éléments parmi un moindre changement de cap, une moindre consommation de carburant, une moindre distance au repère le plus proche dans l'approche, une moindre valeur de MDA (altitude de descente minimale) de l'approche ou une moindre valeur de DH (hauteur de décision) de l'approche.

10. Module de procédure d'approche (102) dans un aéronef, comprenant un ou plusieurs processeurs configurés par programmation d'instructions dans des supports non transitoires lisibles par ordinateur, le module de procédure d'approche (102) étant configuré pour :
déterminer qu'une première procédure d'approche planifiée ne peut pas être effectuée avec une première piste (802) ;
identifier une pluralité de procédures d'approche alternatives à utiliser avec la première piste (804) ;
classer les procédures d'approche alternatives en fonction des changements par rapport à la première procédure d'approche (806) ;
afficher les procédures d'approche alternatives classées sur un afficheur de cockpit (808) ;
recevoir une sélection d'une procédure d'approche alternative classée (810) ; et
activer automatiquement la procédure d'approche sélectionnée (812).
